# EUROPEAN PATENT APPLICATION

(11) **EP 4 726 855 A1**
(43) Date of publication of application: **15.04.2026**
(21) Application number: 24863211.9
(22) Date of filing: 05.09.2024
(51) Int. Cl.: H01M 10/44, H01M 4/1391, H01M 4/04, H01M 10/058, H01M 4/505, H01M 10/052, H01M 4/02

(54) **METHOD FOR MANUFACTURING LITHIUM SECONDARY BATTERY**

(30) Priority: 06.09.2023 KR 20230118663; 04.09.2024 KR 20240119900
(71) Applicant: LG Energy Solution, Ltd., Seoul 07335 (KR)
(72) Inventor: JANG, Daeun, Daejeon 34122 (KR); SUNG, Kiwon, Daejeon 34122 (KR); KANG, Bohyun, Daejeon 34122 (KR); HAN, Myoung Hun, Daejeon 34122 (KR); KIM, Jeongmin, Daejeon 34122 (KR)
(74) Representative: Hoffmann Eitle
(86) International application number: PCT/KR2024/013394
(87) International publication number: WO 2025/053632

(57) **Abstract**

The present disclosure relates to a manufacturing method of a lithium secondary battery comprising the steps of: preparing a battery cell including a positive electrode, a negative electrode and an electrolyte, wherein the positive electrode includes a lithium-rich manganese-based oxide in which the manganese content of all metals excluding lithium is greater than 50 mol% and the ratio of the number of moles of lithium to the number of moles of all metals excluding lithium (Li/Me) is greater than 1; and charging and discharging the battery cell at least once to activate the cell, wherein in the activating step, the charging is performed in a constant current-constant voltage mode, and the charging is ended when the charging current rate reaches 0.01 C to 0.04 C, and wherein in a region where the state of charge(SOC) of the battery cell is 3 to 60%, the charging current rate is 0.8 C to 1.2 C.

## Description

### [TECHNICAL FIELD]

### Cross-Reference to Related Application(s)

This application claims the benefit of priority to Korean Patent Application No. 10-2023-0118663, filed on September 6, 2023, and Korean Patent Application No. 10-2024-0119900, filed on September 4, 2024, with the Korean Intellectual Property Office, the disclosures of which are incorporated herein by reference in their entirety.

The present disclosure relates to a manufacturing method of a lithium secondary battery, and more particularly, a manufacturing method of a lithium secondary battery that can improve voltage sagging caused in the activation process of a battery comprising a lithium-rich manganese-based oxide.

### [BACKGROUND]

Lithium secondary batteries are energy storage media that have been applied in various fields since they were commercially introduced in 1991. As the market for products equipped with lithium secondary batteries expands, research to increase the energy density of lithium secondary batteries has been actively conducted. One of the methods that is attracting the most attention is developing a positive electrode active material with a composition that can utilize a larger amount of lithium than before.

As a positive electrode active material that can utilize a larger amount of lithium, lithium-rich transition metal oxide having a layered structure and having a molar ratio of lithium to transition metal of greater than 1 have been developed. Since such a lithium-rich transition metal oxide achieves capacity by simultaneously utilizing not only the cation redox reaction of the transition metal but also the anion redox reaction using oxygen in the positive electrode structure, it is possible to achieve high capacity. Typical lithium-rich transition metal oxides currently being actively studied include lithium-rich manganese-based oxides in which the molar ratio of lithium to transition metal is greater than 1 and the content of manganese in the total transition metal is 50 mol% or more. The lithium-rich manganese-based oxide has a structure in which LiMO₂ (where M is a transition metal) having a layered structure and Li₂MnO₃ having a rock-salt phase structure are intermingled, wherein an activation process is performed at a high voltage of 4.3V or more, so that Li₂MnO₃ can be activated to achieve high capacity.

However, if the activation of the positive electrode active material is not performed properly in the high-voltage activation process, a significant change in the crystal structure of the lithium-rich manganese-based oxide may occur during high-temperature storage, which may cause a problem of a greater voltage sagging.

### [DETAILED DESCRIPTION OF THE INVENTION]

### [Technical Problem]

It is an object of the present disclosure to provide a manufacturing method of a lithium secondary battery using a lithium-rich manganese-based oxide, which can improve voltage sagging caused during high-temperature storage by performing activation under certain conditions.

### [Technical Solution]

According to an embodiment of the present disclosure, there is provided a manufacturing method of a lithium secondary battery comprising the steps of: preparing a battery cell including a positive electrode, a negative electrode and an electrolyte, wherein the positive electrode includes a lithium-rich manganese-based oxide in which the manganese content of all metals excluding lithium is greater than 50 mol% and the ratio of the number of moles of lithium to the number of moles of all metals excluding lithium (Li/Me) is greater than 1; and charging and discharging the battery cell at least once to activate the cell,
wherein in the activating step, the charging is performed in a constant current-constant voltage mode, and the charging is ended when the charging current rate reaches 0.01 C to 0.04 C, and wherein in a region where the state of charge(SOC) of the battery cell is 3 to 60%, the charging current rate is 0.8 C to 1.2 C.

The end voltage of charge may be 4.5V to 4.7V.

In the activating step, the charging may comprise: a first charging step of performing constant current charging at a first current rate, a second charging step of performing constant current charging at a second current rate different from the first current rate, and a third charging step of performing constant current charging at a third current rate different from the first current rate and then performing constant voltage charging. In this case, the first current rate, the second current rate and the third current rate may be each independently 0.1C to 1.2C.

The first charging step may be performed up to SOC 0 to 3%, the second charging step may be performed up to SOC 3 to 60%, and the third charging step may be performed up to SOC 60 to 100%. In this case, the second current rate may be 0.8C to 1.2C. In addition, the first current rate may be 0.1C to 0.3C, and the third current rate may be 0.3C to 1.0C.

In the activating step, the discharging may be performed at a current rate of 0.3C to 0.8C until 2.0V to 3.0V, e.g., 2.0V, is reached.

The lithium-rich manganese-based oxide may be represented by the following Chemical Formula 1.

[Chemical Formula 1] LiₐNi_{b}Co_{c}Mn_{d}MₑO₂

wherein in Chemical Formula 1, 1.0<a, 0≤b≤0.5, 0≤c≤0.1, 0.5≤d≤1.0, 0≤e≤0.2, and
the M is at least one selected from the group consisting of Al, B, Co, W, Mg, V, Ti, Zn, Ga, In, Ru, Nb, Sn, Sr and Zr. In Chemical Formula 1, 1.2≤a≤1.5, 0.1≤b≤0.4, 0≤c≤0.05, 0.5≤d≤0.8 and 0≤e≤0.1.

### [Advantageous Effects]

In the manufacturing method of a lithium secondary battery, the activation charging step is performed in a constant current-constant voltage mode, and the charging is ended when the charging current rate reaches 0.01C to 0.04C, wherein the charging current rate may be 0.8C to 1.2C in a region where the state of charge(SOC) of the battery cell is 3 to 60%.

Thereby, the activation ratio of Li₂MnO₃, which is a rock-salt phase in the crystal structure of the positive electrode active material during high-temperature storage, is increased, thereby effectively improving the voltage sagging.

### [BRIEF DESCRIPTION OF THE DRAWINGS]

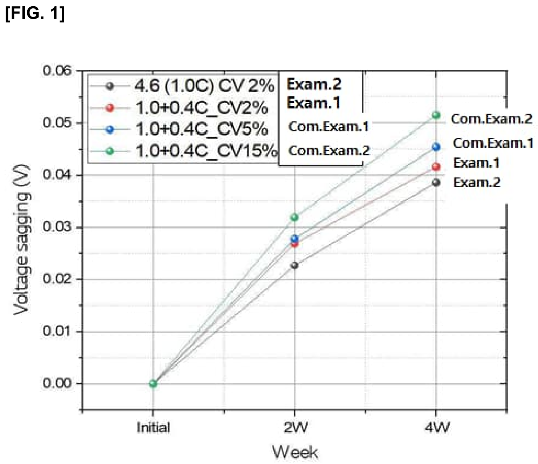

FIG. 1 is a graph showing the high-temperature storage characteristics of lithium secondary batteries activated by the methods of Examples 1 and 2 and Comparative Examples 1 and 2.

### [DETAILED DESCRIPTION OF THE EMBODIMENTS]

Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, such embodiments are provided so that this disclosure will be thorough and complete and will fully convey the concept of the invention to those skilled in the art, and the present disclosure will only be defined by the appended claims. The same reference numerals will be used throughout to designate the same or like elements.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" used herein does not exclude the existence or the addition of one or more elements other than those mentioned.

Throughout the description, when a portion is referred to as "including" or "comprising" a certain component, it means that the portion can further include other components, without excluding the other components, unless otherwise stated.

The term "and/or" as used in a phrase such as "A and/or B" herein is intended to include "A" (alone), or "B" (alone), or "both A and B".

As used herein, the term "primary particle" refers to a particle unit in which grain boundaries do not appear to exist when observed with the field of view of 5000 to 20000 magnification using a scanning electron microscope. "Average particle size of primary particles" refers to the arithmetic average value of primary particles observed in a scanning electron microscope image calculated after measuring their particle sizes.

As used herein, the term "secondary particle" is a particle formed by agglomerating a plurality of primary particles.

As used herein, the term "the average particle size D₅₀" means a particle size at which cumulative volumes of powder particles (e.g., positive electrode active material, negative electrode active material, etc.) reach 50% in the particle size distribution curve of the particles. The average particle size D₅₀ can be measured using a laser diffraction method. It can be measured by a process which includes dispersing the powder of particles to be measured in a dispersion medium, introducing it into a commercially available laser diffraction particle size measurement device (e.g., Microtrac MT 3000), irradiating it with ultrasound of about 28 kHz with the output power of 60W to obtain a volume cumulative particle size distribution, and determining the particle size corresponding to 50% of cumulative volume.

As used herein, "SOC X" refers to a state where the percentage of the capacity charged in the battery cell based on the discharge capacity appearing when the battery cell is discharged from 4.6 V to 2.0 V is X.

The present inventors have conducted repeated research to improve the voltage sagging caused during high-temperature storage of lithium secondary batteries using a lithium-rich manganese-based oxide, and as a result, found that when manufacturing a lithium secondary battery, an activating step can be performed under specific charging conditions, thereby improving the voltage sagging, and completed the present disclosure.

Now, a manufacturing method of a lithium secondary battery according to an embodiment of the present disclosure will be described.

The manufacturing method of a lithium secondary battery according to an embodiment comprises: (1) a step of preparing a battery cell including a positive electrode, a negative electrode and an electrolyte, wherein the positive electrode includes a lithium-rich manganese-based oxide in which the manganese content of all metals excluding lithium is greater than 50 mol% and the ratio of the number of moles of lithium to the number of moles of all metals excluding lithium (Li/Me) is greater than 1; and (2) a step of charging and discharging the battery cell at least once to activate the cell,
wherein in the activating step, the charging is performed in a constant current-constant voltage mode, and the charging is ended when the charging current rate reaches 0.01 C to 0.04 C, and wherein in a region where the state of charge(SOC) of the battery cell is 3 to 60%, the charging current rate is 0.8 C to 1.2 C.

### (1) Step of preparing a battery cell

First, a battery cell including a positive electrode, a negative electrode and an electrolyte is prepared.

The battery cell can be prepared, for example, by forming an electrode assembly including a positive electrode and a negative electrode, housing the electrode assembly in a battery case, and then injecting an electrolyte to seal a battery case. At this time, the electrode assembly may include a separator between the positive electrode and the negative electrode.

Below, each component of such a battery cell will be described in more detail.

### Positive electrode

Meanwhile, in the battery cell, the positive electrode includes a lithium-rich manganese-based oxide in which the manganese content of all metals excluding lithium is greater than 50 mol% and the ratio of the number of moles of lithium to the number of moles of all metals excluding lithium (Li/Me) is greater than 1. Specifically, the positive electrode includes a positive electrode current collector, and a positive electrode active material layer formed on at least one surface of the positive electrode current collector, wherein the positive electrode active material layer includes a lithium-rich manganese-based oxide in which the ratio of the number of moles of lithium to the number of moles of all metals excluding lithium (Li/Me) is greater than 1.

In the case of lithium-rich manganese-based oxide containing excessive lithium, it has a structure of layered phase(LiM'O₂) and rock-salt phase(Li₂MnO₃) are intermingled. During the initial activation process, the rock-salt phase is activated and excessive lithium ions are generated, thereby achieving high capacity.

In a specific embodiment, the lithium-rich manganese-based oxide may be represented by the following Chemical Formula 1.

[Chemical Formula 1] LiₐNi_{b}Co_{c}Mn_{d}MₑO₂

wherein in Chemical Formula 1, M may be at least one selected from the group consisting of Al, B, Co, W, Mg, V, Ti, Zn, Ga, In, Ru, Nb, Sn, Sr and Zr.

Meanwhile, a is the molar ratio of Li in the lithium-rich manganese-based oxide, and may be 1.0<a, 1.1≤a≤1.5, 1.2≤a≤1.5, or 1.1≤a≤1.3. a satisfies the above range, so that the irreversible capacity of the negative electrode can be sufficiently compensated, and high capacity characteristics can be realized.

The b is the molar ratio of Ni in the lithium-rich manganese-based oxide, and may be 0≤b≤0.5, 0.1≤b≤0.4, or 0.2≤b≤0.4.

The c is the molar ratio of Co in the lithium-rich manganese-based oxide, and may be 0≤c≤0.1, 0≤c≤0.08, or 0≤c≤0.05. If c exceeds 0.1, it is difficult to secure high capacity, and the generation of gas and deterioration of the positive electrode active material become intensified, and the life characteristics may deteriorate.

The d is the molar ratio of Mn in the lithium-rich manganese oxide, and may be 0.5≤d<1.0, 0.5≤d≤0.8, or 0.5≤d≤0.7. If d is less than 0.5, the proportion of the rock-salt phase becomes too small, so the effects of negative electrode irreversibility compensation and capacity improvement are slight.

The e is the molar ratio of the doping element M in the lithium-rich manganese-based oxide, and may be 0≤e≤0.2, 0≤e≤0.1, or 0≤e≤0.05. If the content of the doping element is too high, it may have an adverse effect on the capacity of the active material.

Meanwhile, in the lithium-rich manganese-based oxide represented by Chemical Formula 1, the ratio of the number of moles of Li to the number of moles of all metal elements excluding Li (Li/Me) may be 1.2-1.5, 1.25-1.5, or 1.25-1.4. When the Li/Me ratio satisfies the above range, rate characteristics and capacity characteristics can excellently exhibit. If the Li/Me ratio is too high, electrical conductivity may decrease and the rock-salt phase(Li₂MnO₃) may increase, which may increase the degradation rate. If the Li/Me ratio is too low, the effect of improving energy density is slight.

Meanwhile, the composition of the lithium-rich manganese-based oxide may be represented by the following Chemical Formula 2.

[Chemical Formula 2] X Li₂MnO₃·(1-X)Li[Ni_{1-y-z-w}Mn_{y}Co_{z}M_{w}]O₂

wherein in Chemical Formula 2, M may be at least one metal ion selected from the group consisting of Al, B, Co, W, Mg, V, Ti, Zn, Ga, In, Ru, Nb, Sn, Sr and Zr.

The X refers to the ratio of the rock-salt phase(Li₂MnO₃) in the lithium-rich manganese-based oxide, and may be 0.2≤X≤0.5, 0.25≤X≤0.5, or 0.25≤X≤0.4. When the ratio of the Li₂MnO₃ phase in the lithium-rich manganese-based oxide satisfies the above range, the irreversible capacity of the silicone-based negative electrode active material can be sufficiently compensated, and high capacity characteristics can be realized.

The y is the molar ratio of Mn in the LiM'O₂ layer, and may be 0.4≤y<1, 0.4≤y≤0.8, or 0.4≤y≤0.7.

The z is the molar ratio of Co in the LiM'O₂ layer, and may be 0≤z≤0.1, 0≤z≤0.08, or 0≤z≤0.05. When z is greater than 0.1, gas generation and deterioration of the positive electrode active material may become intensified, and the life characteristics may deteriorate.

The w is the molar ratio of the doping element M in the LiM'O₂ layer, and may be 0≤w≤0.2, 0≤w≤0.1, or 0≤w≤0.05.

Meanwhile, the positive electrode active material may further include a coating layer on the surface of the lithium-rich manganese-based oxide, if necessary. When the positive electrode active material includes a coating layer, contact between the lithium-rich manganese-based oxide and the electrolyte is suppressed by the coating layer, and side reactions of the electrolyte are reduced, thereby obtaining the effect of improving the life characteristics.

The coating layer may include a coating element M¹, and the coating element M¹ may be, for example, at least one selected from the group consisting of Al, B, Co, W, Mg, V, Ti, Zn, Ga, In, Ru, Nb, Sn, Sr and Zr, preferably, Al, Co, Nb, W, and a combination thereof, and more preferably, Al, Co, and a combination thereof. The coating element M¹ may include two or more types, for example, Al and Co.

The coating element may be present in the coating layer, in oxide form, i.e., M¹O_{z} (1≤z≤4).

The coating layer can be formed through methods such as dry coating, wet coating, chemical vapor deposition(CVD), physical vapor deposition(PVD), and atomic layer deposition(ALD). Among these, it is preferable to form it through atomic layer deposition in that the coating layer can be formed to have a wider area.

The formation area of the coating layer may be 10% to 100%, preferably 30% to 100%, and more preferably 50% to 100%, based on the total surface area of the lithium-rich manganese-based oxide particles. When the formation area of the coating layer satisfies the above range, the effect of improving life characteristics is excellent.

Meanwhile, the positive electrode active material may be in the form of secondary particles in which a plurality of primary particles are agglomerated, and the average particle size D₅₀ of the secondary particles may be 2 *µ*m to 10 *µ*m, or 2 *µ*m to 8 *µ*m, or 4 *µ*m to 8 *µ*m. When the D₅₀ of the positive electrode active material satisfies the above range, the electrode density can be excellently achieved, and degradation of capacity and rate characteristics can be minimized.

Further, the positive electrode active material may have a BET specific surface area of 1m²/g to 10m²/g, 3m²/g to 8m²/g or 4m²/g to 6m²/g. If the BET specific surface area of the positive electrode active material is too low, the reaction area with the electrolyte is insufficient, which makes it difficult to achieve sufficient capacity. If the specific surface area is too high, moisture absorption is rapid and side reactions with electrolytes are accelerated, which makes it difficult to secure life characteristics.

Meanwhile, the lithium-rich manganese-based oxide can be produced by mixing a transition metal precursor and a lithium raw material and then firing the mixture.

As the lithium raw material, for example, lithium-containing carbonates (e.g., lithium carbonate, etc.), hydrates (e.g., lithium hydroxide hydrate(LiOH·H₂O), etc.), hydroxides (e.g., lithium hydroxide, etc.), nitrates (e.g., lithium nitrate(LiNO₃), etc.), chlorides (e.g., lithium chloride(LiCl), etc.), and the like can be used, and among these, one type alone or a mixture of two or more types can be used.

Meanwhile, the transition metal precursor may be in the form of hydroxides, oxides, or carbonates. When the carbonate form of the precursor is used, it is more preferable in that a positive electrode active material with a relatively high specific surface area can be produced.

The transition metal precursor can be prepared by a co-precipitation process. For example, the transition metal precursor can be prepared by dissolving each transition metal-containing raw material in a solvent to prepare a metal solution, then mixing the metal solution, an ammonium cation complex forming agent, and a basic compound, and proceeding with a coprecipitation reaction. Further, if necessary, an oxidizing agent or oxygen gas may be further added during the coprecipitation reaction.

At this time, the transition metal-containing raw material may be acetate, carbonate, nitrate, sulfate, halide, sulfide, and the like of each transition metal. Specifically, the transition metal-containing raw material may be NiO, NiCO₃·2Ni(OH)₂·4H₂O, NiC₂O₂·2H₂O, Ni(NO₃)₂·6H₂O, NiSO₄, NiSO₄·6H₂O, Mn₂O₃, MnO₂, Mn₃O₄, MnCO₃, Mn(NO₃)₂, MnSO₄ ·H₂O, manganese acetate, manganese halide, cobalt sulfate, cobalt nitrate, cobalt carbonate, cobalt oxide, cobalt acetate, cobalt halide, and the like.

The ammonium cation complex forming agent may be at least one selected from the group consisting of NH₄OH, (NH₄)₂SO₄, (NH₄)₂NO₃, NH₄Cl, CH₃COONH₄, and NH₄CO₃.

The basic compound may be at least one selected from the group consisting of NaOH, Na₂CO₃, KOH, and Ca(OH)₂. The form of the precursor may vary depending on the type of the basic compound used. For example, when NaOH is used as a basic compound, a hydroxide form of the precursor can be obtained, and when Na₂CO₃ is used as a basic compound, a carbonate form of the precursor can be obtained. Further, when a basic compound and an oxidizing agent are used together, an oxide form of the precursor can be obtained.

Meanwhile, the transition metal precursor and the lithium raw material can be mixed in an amount such that the molar ratio of total transition metals (Ni+Co+Mn):Li is 1:1.05-1:2, preferably 1:1.1-1:1.8, and more preferably 1:1.25-1:1.8.

Meanwhile, the firing may be performed at a temperature of 600°C to 1000°C or 700°C to 950°C, and the firing time may be 5 hours to 30 hours or 5 hours to 20 hours. Further, the firing atmosphere may be an air atmosphere or an oxygen atmosphere, for example, an atmosphere containing oxygen at 20% by volume to 100% by volume.

Meanwhile, the positive electrode active material layer may further include a conductive material and a binder in addition to the positive electrode active material.

Examples of the conductive material include spherical or flaky graphite; carbon-based material such as carbon black, acetylene black, ketjen black, channel black, furnace black, lamp black, thermal black, carbon fiber, single-wall carbon nanotubes, and multi-wall carbon nanotubes; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and the like. Among these, one type alone or a mixture of two or more types can be used. The conductive material can be contained in an amount of 0.1% by weight to 20% by weight, 1% by weight to 20% by weight, or 1% by weight to 10% by weight, based on the total weight of the positive electrode active material layer.

Further, examples of the binder include polyvinylidene fluoride(PVDF), a vinylidene fluoride-hexafluoropropylene copolymer(PVDF-co-HFP), polyvinyl alcohol, polyacrylonitrile, carboxymethyl cellulose(CMC), starch, hydroxypropyl cellulose, regenerated cellulose, polyvinyl pyrrolidone, polytetrafluoroethylene, polyethylene, polypropylene, ethylene-propylene-diene monomer rubber(EPDM rubber), sulfonated-EPDM, styrene butadiene rubber(SBR), fluoro rubber, or various copolymers thereof, and any one alone or a mixture of two or more of them may be used. The binder may be contained in an amount of 1% by weight to 20% by weight, 2% by weight to 20% by weight, or 2% by weight to 10% by weight, based on the total weight of the positive electrode active material layer.

### Negative electrode

Next, the negative electrode may include, for example, a negative electrode current collector and a negative electrode active material layer located on the negative electrode current collector. The negative electrode active material layer may optionally include a binder and a conductive material along with the negative electrode active material.

The negative electrode current collector is not particularly limited as long as it has high conductivity without causing a chemical change in the battery, and, for example, copper, stainless steel, aluminum, nickel, titanium, fired carbon, or an aluminum or stainless steel which is surface-treated with carbon, nickel, titanium, silver, or the like, an aluminum-cadmium alloy, or the like may be used. Further, the negative electrode current collector may generally have a thickness of 3*µ*m to 500*µ*m. Also, similar to the positive electrode collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

As the negative electrode active material, a compound capable of reversible intercalation and deintercalation of lithium can be used. Specific examples of the negative electrode active material may include a carbonaceous material such as artificial graphite, natural graphite, graphitized carbon fiber or amorphous carbon; a (semi)metal-based material capable of alloying with lithium, such as Si, Al, Sn, Pb, Zn, Bi, In, Mg, Ga, Cd, Si alloy, Sn alloy, or Al alloy; (semi)metal oxides capable of doping and de-doping lithium, such as SiO_{β} (0<β< 2), SnO₂, vanadium oxide, and lithium vanadium oxide; or a composite containing the (semi)metal-based material and the carbonaceous material, such as Si-C composite or Sn-C composite, and any one alone or a mixture of two or more thereof can be used.

Further, a metallic lithium thin film may be used as the negative electrode active material. Further, both low-crystalline carbon and highly-crystalline carbon can be used as the carbon material. Typical examples of the low-crystalline carbon include soft carbon and hard carbon. Typical examples of the highly-crystalline carbon include amorphous, plate-like, flaky, spherical or fibrous natural graphite or artificial graphite, kish graphite, pyrolytic carbon, mesophase pitch-based carbon fiber, meso-carbon microbeads, high-temperature sintered carbon such as mesophase pitches and petroleum or coal tar pitch derived cokes.

The conductive material is used to impart conductivity to the electrode, and the conductive material can be used without particular limitation as long as it has electronic conductivity without causing chemical changes in the battery to be configured. Specific examples thereof include graphite such as natural graphite and artificial graphite; carbon-based materials such as carbon black, acetylene black, ketjen black, channel black, furnace black, lamp black, thermal black, carbon fiber, and carbon nanotube; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and any one type alone or a mixture of two or more types of them can be used. The conductive material may typically be contained in an amount of 1% by weight to 30% by weight, preferably 1% by weight to 20% by weight, and more preferably 1% by weight to 10% by weight, based on the total weight of the negative electrode active material layer.

The binder performs the role of improving adhesion between negative electrode active material particles and an adhesive force between the negative electrode active material and the negative electrode current collector. Specific examples thereof include polyvinylidene fluoride(PVDF), a vinylidene fluoride-co-hexafluoropropylene copolymer(PVDF-co-HFP), polyvinyl alcohol, polyacrylonitrile, carboxymethyl cellulose(CMC), starch, hydroxypropylcellulose, regenerated cellulose, polyvinyl pyrrolidone, polytetrafluoroethylene, polyethylene, polypropylene, an ethylene-propylene-diene monomer rubber(EPDM rubber), a sulfonated EPDM, styrene butadiene rubber(SBR), fluoro rubber, or various copolymers thereof, and any one type alone or a mixture of two or more types of them can be used. The binder may be contained in an amount of 1% by weight to 30% by weight, preferably 1% by weight to 20% by weight, and more preferably 1% by weight to 10% by weight, based on the total weight of the negative electrode active material layer.

The negative electrode active material layer may be prepared by coating a negative electrode slurry containing a negative electrode active material and optionally a binder and a conductive material onto a negative electrode current collector, and drying the coated slurry, or may be prepared by casting the negative electrode slurry on a separate support and then laminating a film peeled from the support on the current collector.

### Separator

Next, the separator separates the negative electrode and the positive electrode from each other, and provides a migration passage for lithium ions. The separator can be used without particular limitation as long as it is used as a separator in a typical lithium secondary battery. Particularly, it is preferable that the separator has a low resistance against the ion migration of the electrolyte and has an excellent ability to impregnate the electrolyte. Specifically, the separator may be a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, or a laminated structure of two or more layers thereof. Further, a typical porous nonwoven fabric, for example, a nonwoven fabric made of a glass fiber having a high melting point, a polyethylene terephthalate fiber or the like can be used. In addition, in order to secure heat resistance or mechanical strength, a coated separator containing a ceramic ingredient or a polymer material can be used, and may be optionally used as a single layer or multilayer structure.

### Electrolyte

Next, the electrolyte may include various electrolytes that can be used in lithium secondary batteries, such as an organic liquid electrolyte, an inorganic liquid electrolyte, a solid polymer electrolyte, a gel-type polymer electrolyte, a solid inorganic electrolyte, a melt-type inorganic electrolyte, or a combination thereof, and the type thereof is not particularly limited.

For example, the electrolyte may include an organic solvent and a lithium salt.

The organic solvent can be used without any particular limitation as long as it serves as a medium through which ions involved in the electrochemical reaction of the battery may migrate. Specific examples of the organic solvent may include an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate(DMC), diethyl carbonate(DEC), ethylmethyl carbonate(EMC), ethylene carbonate(EC), or propylene carbonate(PC); an alcohol-based solvent such as ethyl alcohol or isopropyl alcohol; nitriles such as R-CN (wherein R is a linear, branched or cyclic hydrocarbon group having 2 to 20 carbon atoms, and may include a double bond, an aromatic ring or ether bond); amides such as dimethylformamide; dioxolanes such as 1,3-dioxolane; sulfolane; or the like.

The lithium salt can be used without any particular limitation as long as it is a compound capable of providing lithium ions used in the lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt that can be used herein may be LiPF₆, LiN(FSO₂)₂, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, Lil, LiB(C₂O₄)₂ or the like. The concentration of the lithium salt may be preferably used within the range of 0.1 M to 5.0M.

In order to improve the life characteristics of the battery, suppress the decrease of the battery capacity, improve the discharging capacity of the battery, etc., the electrolyte may further include an additive, in addition to the above electrolyte ingredients. For example, as the additive, a haloalkylene carbonate-based compound such as difluoroethylene carbonate; pyridine; triethylphosphite; triethanolamine; cyclic ether; ethylene diamine; n-glyme; hexamethyl phosphoric triamide; nitrobenzene derivatives; sulfur; quinone imine dyes; N-substituted oxazolidinones; N,N-substituted imidazolidine; ethylene glycol dialkyl ether; ammonium salt; pyrrole; 2-methoxy ethanol; aluminum trichloride; or the like can be used alone or in combination, but are not limited thereto. The additive may be contained in an amount of 0.1% by weight to 10% by weight, preferably 0.1% by weight to 5% by weight, based on the total weight of the electrolyte.

Meanwhile, the electrode assembly may be various forms of electrode assemblies well known in the art, for example, a jelly-roll type, a stacked type, a stacked and laminated type, or a stack and folding type electrode assembly, and the form thereof is not particularly limited.

The jelly-roll type electrode assembly can be produced by interposing a sheet-shaped separator between a sheet-shaped positive electrode and a sheet-shaped negative electrode and then winding it in one direction.

The stacked type electrode assembly can be produced by cutting a positive electrode, a separator and a negative electrode into a desired shape and then sequentially stacking the cut positive electrode/separator/ negative electrode.

The stacked and laminated type electrode assembly can be produced by a method of stacking a positive electrode, a separator and a negative electrode to produce a plurality of unit cells, stacking the plurality of unit cells with a separator interposed therebetween, and then laminating them through a method such as heating.

The stack and folding type electrode assembly can be produced by a method of stacking a positive electrode, a separator and a negative electrode to produce a plurality of unit cells, arranging the plurality of unit cells on one surface or both side surfaces of a long folding separator and then winding the folding separator.

Meanwhile, as the battery case, various battery cases known in the art, for example, a cylindrical battery case, a prismatic battery case, or a pouch-type battery case, and the like can be used, and the type thereof is not particularly limited.

### (2) Activating step

Next, an activating step of charging and discharging the battery cell at least once to electrically activate the battery cell is performed. The activating step is a step of charging and discharging the battery cell to impart electrical properties and forming a SEI (Solid Electrolyte Interphase) film on the electrodes to stabilize the battery.

In an embodiment of the present disclosure, the activation depth for Li₂MnO₃ (monoclinic) can be adjusted in some sections of the activation charging step, thereby reducing the rate of change of the Li₂MnO₃ (monoclinic) phase, that is, reducing the activation, and thus effectively improving the voltage sagging that may be induced during high-temperature storage.

First, the charging may include a first charging step of charging at SOC(State of Charge) 3% or less.

The first charging step may be performed at a current rate of 0.3C or less, or 0.1C to 0.3C. If the rate of current in the first charging step is faster than 0.3C, the SEI film may be unstably formed on the electrode surface. If the SEI film is unstably formed on the electrode surface, the SEI film is easily decomposed during battery operation, causing rapid deterioration of the electrode, which can significantly reduce life characteristics.

The first charging step is preferably performed from SOC 0 to 3%. If the state of charge in the first charging step satisfies the above range, a strong and dense SEI film is formed on the electrode surface, thereby realizing excellent life characteristics.

Next, the charging may include a second charging step of charging at a second current rate of 0.8 C to 1.2 C, preferably 0.9 C to 1.1 C, in the state of charge(SOC) 3 to 60%. This second current rate may be different from the first current rate of the first charging step, and more specifically, may be a current rate greater than the first current rate.

When the second charging step is performed at 0.8C to 1.2C, the activation of the Li₂MnO₃ (monoclinic) phase in the crystal structure of the positive electrode active material increases, which makes it possible to suppress oxygen desorption and cation mixing from occurring during high-temperature storage and reduce the phase change rate of the additional positive electrode active material, thereby improving the voltage sagging caused during high-temperature storage. In addition, the second charging step is performed at a relatively fast C-rate, thereby reducing the time required for the activation process, and shortening the battery production time.

When the charging capacity in the second charging stage satisfies the above range, it is possible to suppress the SEI film from being incompletely formed, and suppress oxygen desorption and cation mixing from occurring during the activation process, thereby minimizing the increase in positive electrode resistance.

Next, the charging may include a third charging step of charging in a constant current mode at a third current rate different from the first current rate in a state of charge(SOC) of 60 to 100%, for example, up to an end voltage of charge, and then charging in a constant voltage mode.

By performing charging in a constant current-constant voltage mode in this way, it is possible to minimize the non-activated Li₂MnO₃(monoclinic) phase, thereby preventing abnormal behavior from occurring during battery operation.

In the third charging step, the constant current charging may be performed at a third current rate that is the same as the second current rate of the second charging step, but this third current rate may be different from the second current rate. In a more specific example, the third current rate may be adjusted to be smaller than the second current rate. This third current rate may be 0.3C to 1.0C, or 0.3C to 0.6C, or 0.8C to 1.0C.

By performing a constant current charge in the C-rate range as described above, it is possible to control the activation depth for the Li₂MnO₃(monoclinic) phase within the crystal structure of the positive electrode active material, thereby more effectively suppressing voltage sagging during high-temperature storage.

The third charging step progresses constant voltage charging after constant current charging under the third current rate, and the constant voltage charging may be ended when the charging current rate reaches 0.01C to 0.04C, preferably 0.01C to 0.035C, and more preferably 0.01C to 0.03C. The third charging step may be ended when the charging current rate is reached, thereby effectively preventing damage to the passive film formed on the electrode surface, and preventing the collapse of the crystal structure of the positive electrode. The activation of the Li₂MnO₃(monoclinic) phase means a change in the phase that can exhibit the high capacity characteristics of the positive electrode active material. When the activation depth for the Li₂MnO₃(monoclinic) phase increases, additional phase changes can be reduced during high-temperature storage, and thus the voltage sagging effect during high-temperature storage may be decreased.

In the third charging step, the end voltage of charge in the constant current mode may be 4.5 V to 4.7 V, specifically 4.6 V. When the end voltage of charge in the third charging step satisfies the above range, the lithium-rich manganese-based oxide may be activated to thereby achieve high capacity characteristics.

Next, the activating step may include a step of discharging the charged battery cell through the first to third charging steps.

In this case, the discharging may be performed at a current rate of 0.3 C to 0.8 C. When the discharge rate satisfies the above range, the activation time may be appropriately controlled, and the discharge capacity characteristics within a desired range may be achieved.

Meanwhile, the discharging may be performed in a constant current mode(CC mode).

Meanwhile, the end voltage of discharge may be 2.0 V to 3.0 V, specifically 2.0V.

Meanwhile, the activating step is preferably performed under temperature conditions of 25°C to 70°C, more preferably 40°C to 50°C. When the activating step is performed in the above temperature range, the effect of realizing high capacity can be obtained through appropriate activation of Li₂MnO₃ (monoclinic) phase.

Further, the activating step may be performed under pressurized conditions, if necessary. The pressurization can be performed by mounting the battery cell to a jig and then applying pressure to the battery cell via the jig. When the activating step is performed under pressurized conditions, it has the advantage that the electrolyte impregnability is improved and gas generated during the activating step can be easily discharged.

Meanwhile, although this is not essentially required, the activating step may further include an aging step, if necessary. The aging step allows the electrolyte to be uniformly impregnated into the electrode assembly and stabilizes the battery, and may be performed before charging, during charging, and/or after discharging, and may be performed at least once.

The aging step may be performed at a temperature of, for example, 20°C to 60°C, 20°C to 50°C, and preferably 30°C to 50°C. When the aging is performed at the above temperature, electrolyte impregnability and lithium mobility are improved so that activation can be performed more smoothly.

Hereinafter, embodiments of the invention will be described in detail so that those skilled in the art can easily practice the invention. However, the invention may be embodied in various different forms and is not limited to the embodiments described herein.

### Example and Comparative Example

### Example 1

### (Manufacture of lithium secondary battery)

A positive electrode active material: a conductive material: a PVDF binder were mixed at a weight ratio of 97 : 1 : 2 in N-methylpyrrolidone to prepare a positive electrode slurry. At this time, Li_{1.38}[Ni_{0.363}Co_{0.005}Mn_{0.642}]O₂ was used as the positive electrode active material, and carbon nanotube(CNT) was used as the conductive material. The positive electrode slurry was coated onto an aluminum current collector sheet, dried, and then rolled to manufacture a positive electrode.

A negative electrode active material: a conductive material: a binder were mixed at a weight ratio of 96:1:3 in water to prepare a negative electrode slurry. At this time, graphite was used as the negative electrode active material, a carbon black was used as a conductive material, and SBR and CMC were mixed and used at a weight ratio of 2:1 as the binder. The negative electrode slurry was coated onto a copper current collector sheet, dried, and then rolled to manufacture a negative electrode.

A separator was interposed between the positive electrode and the negative electrode manufactured as above to produce an electrode assembly, and the electrode assembly was inserted into a battery case, and then an electrolyte was injected therein, thereby manufacturing a battery cell.

### (Activating step)

The lithium secondary battery was pre-aged for 2 days, and then charged up to SOC 3% at a current rate of 0.2C under a constant current-constant voltage mode at 45°C (first charging step), and charged up to SOC 60% at a current rate of 0.33C (second charging step). Constant current charging was performed at a current rate of 0.4C up to 4.6 V, and then changed to a constant voltage mode to perform charging, and the charging was ended when the charging current rate reached 0.02C (third charging step). Then, the charged lithium secondary battery was discharged to 2.0 V at a constant current of 0.6C.

### Example 2

### (Activating step)

The lithium secondary battery manufactured in Example 1 was pre-aged for 2 days, then charged up to SOC 3% at a current rate of 0.2C, and charged up to SOC 100% and 4.6 V at a current rate of 1.0C, and then changed to constant voltage mode to perform charging, and the charging was ended when the charging current rate reached 0.02C. Then, the charged lithium secondary battery was discharged to 2.0 V at a constant current of 0.6C to activate it.

### Comparative Example 1

A lithium secondary battery was activated in the same manner as in Example 1, except that the lithium secondary battery manufactured in Example 1 was charged to 4.6 V at a current rate of 0.4C in the third charging step, then changed to a constant voltage mode to perform charging, and the charging was ended when the charging current rate reached 0.05 C.

### Comparative Example 2

A lithium secondary battery was activated in the same manner as in Example 1, except that the lithium secondary battery manufactured in Example 1 was charged to 4.6V at a current rate of 0.4C in the third charging step, then changed to a constant voltage mode to perform charging, and the charging was ended when the charging current rate reached 0.15C.

### Experimental Example 1: Evaluation of Li₂MnO₃ activation ratio

The Li₂MnO₃ activation ratio(%) of the lithium secondary batteries activated by the methods of Examples 1, 2 and Comparative Examples 1, 2 was calculated, and then the Li₂MnO₃ activation ratio(%) was expressed as a percentage based on the Li₂MnO₃ activation ratio(%) of Comparative Example 1, and shown in [Table 1] below. At this time, the Li₂MnO₃ activation ratio(%) of each lithium secondary battery can be calculated by dividing the charge capacity of the cell obtained by charging from 4.3V to the end voltage of charge by the charge capacity of the cell when charged from 2.0V to 4.6V.

**[Table 1]**

| | Li₂MnO₃ activation ratio(%) | Li₂MnO₃ activation ratio(%) based on Comparative Example 1 |
|---|---|---|
| Example 1 | 59.75 | 101.20 |
| Example 2 | 60.23 | 102.02 |
| Comparative Example 1 | 59.04 | 100 |
| Comparative Example 2 | 58.35 | 98.83 |

As shown in [Table 1], it can be confirmed that in the case of the lithium secondary batteries activated by the methods of Examples 1 and 2, the activation ratio of Li₂MnO₃ is increased compared to the lithium secondary batteries activated by the methods of Comparative Examples.

### Experimental Example 2: Evaluation of voltage sagging

Lithium secondary batteries activated by the methods of Examples 1 and 2 and Comparative Examples 1 and 2 were each subjected to a constant current-constant voltage mode at 25°C and 0.33C, and charged at a charging current rate of 0.05C until the voltage reached 4.35V, and then discharged at a constant current of 0.33C until the voltage reached 2.0V. The battery was stored at 60°C in an SOC 100% for 4 weeks, and then operated again at 25°C at a current rate of 0.33C. The decrease rate(%) calculated by calculating the degree of voltage decrease versus the initial voltage is shown in [Table 2] and FIG. 1.

At this time, the voltage sagging is the value obtained by subtracting the nominal voltage after high-temperature storage from the initial nominal voltage, and the nominal voltage means the value of the discharge energy versus the discharge capacity at 0.33C.

**[Table 2]**

| | dOCV(mV) | Decrease rate (%) |
|---|---|---|
| Example 1 | 41.6 | 1.17 |
| Example 2 | 38.6 | 1.09 |
| Comparative Example 1 | 45.4 | 1.27 |
| Comparative Example 2 | 51.5 | 1.44 |

As shown in [Table 2] and FIG. 1, it can be confirmed that the lithium secondary batteries activated according to the methods of Examples did not show a significant increase in voltage sagging during high-temperature storage, whereas the lithium secondary batteries activated according to the methods of Comparative Examples showed a significant increase in voltage sagging during high-temperature storage.

On the other hand, it can be confirmed that the lithium secondary battery activated by the method of Comparative Example 2 showed a larger voltage sagging than the lithium secondary battery activated by the method of Comparative Example 1. The charge capacity for Li₂MnO₃ can be adjusted in partial sections of the charging step of the activation process, thereby adjusting the activation ratio of the rock-salt phase. While charging in the constant current-constant voltage mode (CC-CV mode) in SOC 60% to 100%, as the charging end current rate during the constant voltage mode (CV mode) charging increases, the charge depth decreases, which decreases the activation rate of Li₂MnO₃. Accordingly, the change in the crystal structure in the lithium-rich transition metal oxide during high-temperature storage occurs more significantly, and the change in the nominal voltage increases more greatly, which may be increased in the amount of the voltage sagging.

## Claims

1. A manufacturing method of a lithium secondary battery comprising the steps of:
preparing a battery cell including a positive electrode, a negative electrode and an electrolyte, wherein the positive electrode includes a lithium-rich manganese-based oxide in which the manganese content of all metals excluding lithium is greater than 50 mol% and the ratio of the number of moles of lithium to the number of moles of all metals excluding lithium (Li/Me) is greater than 1; and charging and discharging the battery cell at least once to activate the cell,
wherein in the activating step, the charging is performed in a constant current-constant voltage mode, and the charging is ended when the charging current rate reaches 0.01 C to 0.04 C, and
wherein in a region where the state of charge(SOC) of the battery cell is 3 to 60%, the charging current rate is 0.8 C to 1.2 C.

2. The manufacturing method of a lithium secondary battery according to claim 1, wherein the end voltage of charge is 4.5V to 4.7V.

3. The manufacturing method of a lithium secondary battery according to claim 1, wherein in the activating step, the charging comprises:
a first charging step of performing constant current charging at a first current rate,
a second charging step of performing constant current charging at a second current rate different from the first current rate, and
a third charging step of performing constant current charging at a third current rate different from the first current rate and then performing constant voltage charging.

4. The manufacturing method of a lithium secondary battery according to claim 3, wherein the first current rate, the second current rate, and the third current rate are each independently 0.1C to 1.2C.

5. The manufacturing method of a lithium secondary battery according to claim 3,
wherein the first charging step is performed up to SOC 0 to 3%, the second charging step is performed up to SOC 3 to 60%, and the third charging step is performed up to SOC 60 to 100%.

6. The manufacturing method of a lithium secondary battery according to claim 3, wherein the first current rate is 0.1C to 0.3C.

7. The manufacturing method of a lithium secondary battery according to claim 3, wherein the third current rate is 0.3C to 1.0C.

8. The manufacturing method of a lithium secondary battery according to claim 1, wherein in the activating step, the discharging is performed at a current rate of 0.3C to 0.8C until 2.0V to 3.0V is reached.

9. The manufacturing method of a lithium secondary battery according to claim 1, wherein the lithium-rich manganese-based oxide is represented by the following Chemical Formula 1.
[Chemical Formula 1] LiₐNi_{b}Co_{c}Mn_{d}MₑO₂
wherein in Chemical Formula 1, 1.0<a, 0≤b≤0.5, 0≤c≤0.1, 0.5≤d≤1.0, 0≤e≤0.2, and
the M is at least one selected from the group consisting of Al, B, Co, W, Mg, V, Ti, Zn, Ga, In, Ru, Nb, Sn, Sr and Zr.

10. The manufacturing method of a lithium secondary battery according to claim 9, wherein in Chemical Formula 1, 1.2≤a≤1.5, 0.1≤b≤0.4, 0≤c≤0.05, 0.5≤d≤0.8 and 0≤e≤0.1.
